# EUROPÄISCHE PATENTANMELDUNG

(11) **EP 2 719 642 A1**
(43) Veröffentlichungstag der Anmeldung: **16.04.2014**
(21) Anmeldenummer: 12187824.3
(22) Anmeldetag: 09.10.2012
(51) Int. Cl.: B65G 21/20, B65G 47/68, B65G 47/70, B65G 47/31

(54) **Vorrichtung und Verfahren zur Vereinzelung von Waren**

(71) Anmelder: Wincor Nixdorf International GmbH, 33106 Paderborn (DE)
(72) Erfinder: Baitz, Günter, Berlin 13629 (DE)
(74) Vertreter: Schröder, Christoph

(57) **Zusammenfassung**

Die Erfindung betrifft eine Vorrichtung zur Vereinzelung von Waren, die aufweist: mindestens ein Warentransportband (5, 6; 4; 7), das in einer horizontalen Ebene angeordnet und dazu ausgebildet ist, auf dem Warentransportband (4) platzierte Waren in eine Transportrichtung zu transportieren, und mindestens ein seitliches Führungselement (81, 82), das schräg zur Transportrichtung ausgerichtet ist. Es ist vorgesehen, dass das seitliche Führungselement (81, 82) derart ausgebildet und angeordnet ist, dass an oder benachbart einer Längsseite des Warentransportbandes (5, 6; 4) platzierte Waren durch das seitliche Führungselement (81, 82) in ihrer Transportgeschwindigkeit verändert werden, während mittig und/oder an der anderen Längsseite des Warentransportbandes (5, 6; 4) platzierte Waren nicht in Kontakt mit dem seitlichen Führungselement (81, 82) treten und eine unveränderte Transportgeschwindigkeit aufweisen. Die Erfindung betrifft des Weiteren ein Verfahren zur Vereinzelung von Waren, die auf einem Warentransportband (5, 6; 4; 7) transportiert werden.

## Beschreibung

Die Erfindung betrifft eine Vorrichtung zur Vereinzelung von Waren gemäß dem Oberbegriff des Patentanspruchs 1 und ein Verfahren zur Vereinzelung von Waren gemäß dem Oberbegriff des Patentanspruchs 14. Die Vorrichtung und das Verfahren sind insbesondere dazu geeignet und vorgesehen, Waren auf einem Warentransportband im Kassenbereich eines Supermarktes oder eines anderen Einkaufsmarktes zu vereinzeln.

In modernen Supermärkten und anderen Einkaufsläden werden zunehmend so genannte "Self Checkout-Geräte" eingesetzt, die herkömmliche Kassen ersetzen und bei denen ein Erfassen der gekauften Ware entweder unter Mithilfe des Kunden, der die gekaufte Ware selbst scannt, oder vollständig selbständig erfolgt. Nach der Erfassung der gekauften Ware begleichen die Kunden den fälligen Betrag an einem Bezahlautomaten.

Im Rahmen des Einsatzes solcher "Self Checkout-Geräte" ist die Verwendung von Tunnelscannern bekannt, bei denen innerhalb eines Tunnels oder Tors Scanner und ggf. weitere Bilderfassungsgeräte positioniert sind, die es ermöglichen, eine Ware zu erfassen.

Ein Problem bei der Nutzung von Tunnelscannern stellt das Verhalten der Kunden im Hinblick auf das Auflegen der zu kaufenden Ware auf ein Warentransportband dar. Während Kunden bei Nutzen einer herkömmlichen Kasse oder beim Selbstscannen der Ware gewohnt sind, ihre Ware dicht gedrängt auf lange Vorlaufbänder zu legen und darauf zu warten, bis der Scannprozess beginnt, erfordert das Tunnelscanning eine exakte Separierung der Waren, um diese einzeln durch den Tunnelscanner laufen zu lassen und somit einzeln scannen und erfassen zu können.

Eine entsprechende Änderung des Auflegeverhaltens der Endkunden gestaltet sich jedoch nicht als trivial, da über Jahre und Jahrzehnte eingeübte Verhaltensmuster dem entgegenstehen. Es besteht somit ein Bedarf, eine automatisierte Vereinzelung von auf ein Warentransportband durch einen Endkunden platzierter Waren vorzunehmen.

Aus der EP 0 218 550 B1 ist eine Vorrichtung zum Vereinzeln und zum Zuführen von länglichen Nahrungsmittelprodukten zu einer Verpackungsmaschine bekannt, bei der die länglichen Nahrungsmittelprodukte zunächst mittels einer Übergabe an Bänder einer höheren Geschwindigkeit ausgerichtet und vereinzelt und anschließend mittels eines schräg zur Förderrichtung angeordneten Führungsbandes, das mit derselben Geschwindigkeit wie das Förderband läuft, seitlich zum Rand des Förderbandes hin verschoben werden. Eine ähnliche Vorrichtung ist auch aus der US 4 889 224 A bekannt.

Der vorliegenden Erfindung liegt die Aufgabe zugrunde, eine Vorrichtung und ein Verfahren zur Vereinzelung von Waren bereitzustellen, die eine weitergehende Vereinzelung von einem Endkunden auf ein Warentransportband platzierter Waren ermöglichen.

Diese Aufgabe wird erfindungsgemäß durch eine Vorrichtung mit den Merkmalen des Anspruchs 1 und ein Verfahren mit den Merkmalen des Anspruchs 14 gelöst. Ausgestaltungen der Erfindung sind in den Unteransprüchen angegeben.

Danach umfasst die erfindungsgemäße Vorrichtung zur Vereinzelung von Waren ein Warentransportband und ein seitliches Führungselement, das schräg zur Transportrichtung des Warentransportbandes ausgerichtet ist. Das seitliche Führungselement ist erfindungsgemäß derart ausgebildet und angeordnet, dass an oder benachbart einer Längsseite des Warentransportbandes platzierte Waren durch das seitliche Führungselement in ihrer Transportgeschwindigkeit verändert werden, während in der Mitte und/oder an der anderen Längsseite des Warentransportbandes platzierte Waren nicht in Kontakt mit dem Führungselement treten und dementsprechend eine unveränderte Transportgeschwindigkeit aufweisen.

Die erfindungsgemäße Lösung basiert auf der Erkenntnis, dass durch eine positive oder negative Geschwindigkeitsänderung von auf dem Transportband außen liegender Waren eine Vereinzelung erreicht werden kann. Eine solche Vereinzelung kann mit weiteren Vereinzelungsschritten wie aufeinanderfolgenden Förderbändern mit zunehmender Geschwindigkeit kombiniert werden, um den Vereinzelungsgrad weiter zu erhöhen.

Eine positive oder negative Geschwindigkeitsänderung eines Teils der Waren, nämlich desjenigen Teils der Waren, die seitlich an oder benachbart einer Längsseite des Warentransportbandes platziert sind, wird dabei durch Kontakt dieser Waren mit dem seitlichen, schräg zur Transportrichtung ausgerichteten Führungselement erreicht. Bei Kontakt mit dem seitlichen Führungselement werden die sich auf dem Warentransportband befindlichen Waren mit einer erhöhten oder reduzierten Geschwindigkeit bewegt und dabei beschleunigt oder verlangsamt, während in der Mitte und/oder an der anderen Längsseite des Warentransportbandes platzierte Waren, die nicht in Kontakt mit dem betrachteten oder einem anderen seitlichen Führungselement treten, ohne eine Änderung ihrer Transportgeschwindigkeit auf dem Warentransportband transportiert werden. Eine eventuell vorhandene dichte Drängung von Waren auf dem Warentransportband wird auf diese Weise aufgelöst und in eine sequenzielle Abfolge der Waren überführt.

Gemäß einem ersten Ausführungsbeispiel der vorliegenden Erfindung ist das seitliche Führungselement als ortfestes Leitelement ohne bewegliche Teile ausgebildet. Da das seitliche Führungselement in diesem Fall ein ortsfestes Leitelement bildet, werden die mit dem seitlichen Führungselement in Kontakt tretenden Waren bei ihrem Kontakt mit dem Führungselement verlangsamt, wodurch der beschriebene Vereinzelungseffekt entsteht.

Gemäß einer alternativen Ausgestaltung der Erfindung ist das seitliche Führungselement dagegen als ein vertikal ausgerichtetes Förderband ausgebildet. Unter einem vertikal ausgerichteten Förderband wird dabei ein Förderband verstanden, dessen Umlenkachsen senkrecht zur horizontalen Ebene verlaufen, in der das Warentransportband angeordnet ist. Das vertikal ausgerichtete Förderband kann dabei an sich beliebig ausgebildet sein, beispielsweise als Band. Die vertikale Erstreckung des Bandes muss lediglich derart sein, dass die erforderliche Führungsfunktion des Führungselementes erfüllt wird. Dabei können auch geringe Bandbreiten des Förderbandes oder sogar ein im Schnitt kreisförmig ausgebildetes Förderband vorgesehen sein.

Das vertikal ausgerichtete Förderband wird mit einer anderen Bandgeschwindigkeit angetrieben als das Warentransportband, das durch das vertikal ausgerichtete Förderband seitlich begrenzt wird. Dies ist wichtig, damit der beschriebene Effekt einer Änderung der Transportgeschwindigkeit auftritt, wenn die Ware das vertikal ausgerichtete Förderband kontaktiert. Hierbei sind mehrere Ausführungsvarianten möglich, die allesamt zu einer Beschleunigung und damit Geschwindigkeitsänderung der Ware führen.

So kann gemäß einer ersten Ausführungsvariante vorgesehen sein, dass das vertikal ausgerichtete Förderband mit einer schnelleren Bandgeschwindigkeit angetrieben wird als das Warentransportband. Bevorzugt liegt die Bandgeschwindigkeit des vertikal ausgerichteten Förderbandes dabei substantiell oberhalb der Bandgeschwindigkeit des Warentransportbandes, beispielsweise um einen Betrag von mindestens 20%, mindestens 40%, mindestens 60% oder mindestens 80 %. Eine mit der unterschiedlichen Bandgeschwindigkeit verbundene positive Beschleunigung der Ware bei Kontakt mit dem Förderband führt dazu, dass die seitlich platzierte Ware vor die mittig platzierte Ware befördert wird und die Waren dadurch sequentiell angeordnet werden.

Gemäß einer zweiten Ausführungsvariante kann vorgesehen sein, dass das vertikal ausgerichtete Förderband mit einer langsameren Bandgeschwindigkeit angetrieben wird als das Warentransportband. Bevorzugt liegt die Bandgeschwindigkeit des vertikal ausgerichteten Förderbandes dabei substantiell unterhalb der Bandgeschwindigkeit des Warentransportbandes, beispielsweise um einen Betrag von mindestens 20%, mindestens 40%, mindestens 60% oder mindestens 80 %. Eine mit der unterschiedlichen Bandgeschwindigkeit verbundene negative Beschleunigung, d.h. Verlangsamung der Ware bei Kontakt mit dem Förderband führt dazu, dass die seitlich platzierte Ware hinter die mittig platzierte Ware befördert wird und die Waren dadurch sequentiell angeordnet werden.

Gemäß einer dritten Ausführungsvariante kann vorgesehen sein, dass das vertikal ausgerichtete Förderband sich in die entgegensetzte Richtung bewegt, verglichen mit dem Warentransportband. Die gegen das seitliche Führungselement mittels des Warentransportbandes bewegte Ware erhält in diesem Fall einen Bewegungsimpuls in einer Richtung entgegengesetzt zur Transportrichtung, was in besonderem Maße zu einer negativen Bescheunigung bzw. Verlangsamung der Ware führt.

In allen Fällen kann die positive oder negative Beschleunigung der Ware mit einer Drehung der Ware verbunden sein, da der Kontakt mit dem seitlichen Führungselement in der Regel nur punktuell oder in einem kleinen Flächenbereich der Ware erfolgt. Dies ist aber vorteilhaft, da dadurch benachbarte andere Ware ggf. weggestoßen und der Abstand zu dieser vergrößert wird.

Ein weiteres Ausführungsbeispiel der vorliegenden Erfindung sieht vor, dass ein weiteres seitliches Führungselement vorgesehen ist, das schräg zur Transportrichtung ausgerichtet ist, wobei die beiden Führungselemente in Transportrichtung aufeinander zu laufen. Dabei sind die beiden Führungselemente bevorzugt zueinander symmetrisch angeordnet, so dass sie einen zweidimensionalen Trichter mit Verjüngung in Transportrichtung bilden. Bei einer solchen Ausgestaltung der erfindungsgemäßen Vorrichtung tritt der beschriebene Effekt einer Vereinzelung durch Änderung der Transportgeschwindigkeit am seitlichen Führungselement naturgemäß an beiden seitlichen Führungselementen auf, wobei lediglich in der Mitte des Warentransportbandes platzierte Ware ungehindert und ohne Kontakt mit den Führungselementen transportiert wird.

Eine solche trichterförmige Anordnung findet, wie noch beschrieben werden wird, beispielsweise dann in vorteilhafter Weise Anwendung, wenn dem betrachteten Warentransportband zwei parallel zueinander angeordnete Warentransportbänder vorgeschaltet sind, von denen jeweils nur eines zu einem Zeitpunkt betrieben wird, so dass ein zweiter Kunde bereits Ware auflegen kann, während Ware eines ersten Kunden gerade vereinzelt und erfasst wird.

Die beschriebene Verwendung von zweiseitigen Führungselementen, die in Transportrichtung aufeinander zu laufen, ist jedoch auch dann vorteilhaft, wenn die Ware auf nur einem Warentransportband den Führungselementen zugeführt wird, da die Ware durch die trichterförmige Anordnung der zwei Führungselemente sowohl zentriert als auch vereinzelt wird und hierdurch in einer nachfolgenden Warenerfassungseinrichtung gut erkannt werden kann.

Gemäß einer weiteren Ausgestaltung der vorliegenden Erfindung umfasst die Vorrichtung mindestens zwei in Transportrichtung hintereinander angeordnete

Warentransportbänder, bei denen das hintere Warentransportband eine höhere Bandgeschwindigkeit aufweist als das vordere Warentransportband. Beim Übergang vom vorderen Warentransportband auf das hintere Warentransportband (das bevorzugt mit dem mindestens einen seitlichen Führungselement zusammenwirkt) erfolgt somit eine erste Vereinzelung dadurch, dass die Waren auf dem hinteren Transportband mit höherer Geschwindigkeit laufen.

Dabei kann vorgesehen sein, dass dem Warentransportband, das von mindestens einem seitlichen Führungselement seitlich begrenzt ist, ein erstes vorgeschaltetes und ein zweites vorgeschaltetes Warentransportband vorgeschaltet sind, wobei das erste vorgeschaltete Warentransportband und das zweite vorgeschaltete Warentransportband parallel zueinander verlaufen und zusammen eine Breite aufweisen, die in etwa der Breite des folgenden Warentransportbandes entspricht.

Diese Anordnung zweier vorgeschalteter Warentransportbänder nebeneinander ermöglicht es, diese beiden vorgeschalteten Warentransportbänder unabhängig voneinander zu betreiben, insbesondere derart, dass zu einem bestimmten Zeitpunkt stets nur eines dieser Warentransportbänder Waren transportiert, während das andere stillsteht. Hierdurch wird es einem Kunden ermöglicht, Ware bereits zu einem Zeitpunkt auf eines der vorgeschalteten Warentransportbänder aufzulegen (ohne dass sich dieses dabei bewegt), während die Ware eines anderen Kunden aktuell mittels des anderen der vorgeschalteten Warentransportbänder bewegt und mittels der erfindungsgemäßen Vorrichtung vereinzelt wird. Nach Beenden des Erfassungsvorgangs der gekauften Waren und Abschluss des Bezahlvorgangs läuft dann das bisher stillstehende Transportband an und steht das bisher transportierende Transportband still.

Eine weitere Ausgestaltung der vorliegenden Erfindung sieht mindestens ein nachgeschaltetes Warentransportband vor, das dem Warentransportband, das von mindestens einem seitlichen Führungselement seitlich begrenzt ist, nachgeschaltet ist. Dabei ist vorgesehen, dass das nachgeschaltete Warentransportband eine höhere Bandgeschwindigkeit aufweist als das Warentransportband. Dies führt dazu, dass die vom Warentransportband in Verbindung mit mindestens einem seitlichen Führungselement bereits vereinzelte Ware eine weitere Vereinzelung beim Übergang zu dem nachgeschalteten Warentransportband mit höherer Laufgeschwindigkeit erfährt.

Dabei kann vorgesehen sein, dass das nachgeschaltete Warentransportband eine Breite aufweist, die in etwa dem Abstand zweier seitlicher Führungselemente an ihrem zusammenlaufenden Ende entspricht. Das nachgeschaltete Warentransportband schließt sich somit an die Trichtermündung des durch die beiden seitlichen Führungselemente gebildeten zweidimensionalen Trichters an. Die zu erfassende Ware wird dadurch mittig und mit hohem Vereinzelungsgrad auf dem Warentransportband bereitgestellt.

Dabei kann vorgesehen sein, dass im Bereich des nachgeschalteten Warentransportbands ein Tunnelscanner oder eine andere Warenerfassungseinrichtung vorgesehen ist. Ein solcher Tunnelscanner ist beispielsweise als Tunnel oder als Tor mit einer Mehrzahl von an der Innenseite angeordneten Barcode-Scannern und/oder anderen Bilderfassungsgeräten ausgeführt. Die auf dem nachgeschalteten Warentransportband mit hohem Vereinzelungsgrad transportierten Waren werden automatisch und ohne menschliche Interaktion von dem Tunnelscanner oder einer anderen Warenerfassungseinrichtung erfasst.

Die schräge Ausrichtung des seitlichen Führungselements zur Transportrichtung ist gemäß einem Ausführungsbeispiel derart, dass zwischen Führungselement und Transportrichtung ein Winkel realisiert ist. Dieser Winkel liegt beipielsweise zwischen 0° und 90°, insbesondere zwischen 15° und 45°.

Die vorliegende Erfindung betrifft auch ein Verfahren zur Vereinzelung von Waren, die auf einem Warentransportband transportiert werden. Erfindungsgemäß ist vorgesehen, dass an oder benachbart der einen Längsseite des Warentransportbandes platzierte Waren durch ein seitliches Führungselement in ihrer Transportgeschwindigkeit verändert und gleichzeitig in Richtung der Mitte des Warentransportbandes bewegt werden, während in der Mitte und/oder an der anderen Längsseite des Warentransportbandes platzierte Waren nicht in Kontakt mit dem Führungselement treten und an diesem mit unveränderter Transportgeschwindigkeit vorbei transportiert werden.

Dabei kann eine zusätzliche Vereinzelung der Waren dadurch erreicht werden, dass die Waren sukzessive mindestens zwei hintereinander angeordnete Warentransportbänder durchlaufen, die eine zunehmend höhere Bandgeschwindigkeit aufweisen.

Die Erfindung wird nachfolgend unter Bezugnahme auf die Figuren der Zeichnung anhand mehrerer Ausführungsbeispiele näher erläutert. Es zeigen:
- Figur 1: ein erstes Ausführungsbeispiel einer Vorrichtung zur Vereinzelung von Waren, die auf einem Warentransportband transportiert werden, in perspektivischen Darstellung;
- Figur 2: die Vorrichtung der Figur 1 in einer Ansicht von oben;
- Figur 3: ein zweites Ausführungsbeispiel einer Vorrichtung zur Vereinzelung von Waren, die auf einem Warentransportband transportiert werden, in perspektivischer Darstellung; und
- Figur 4: eine Darstellung des Ausführungsbeispiels der Figur 3 in einer Ansicht von oben.

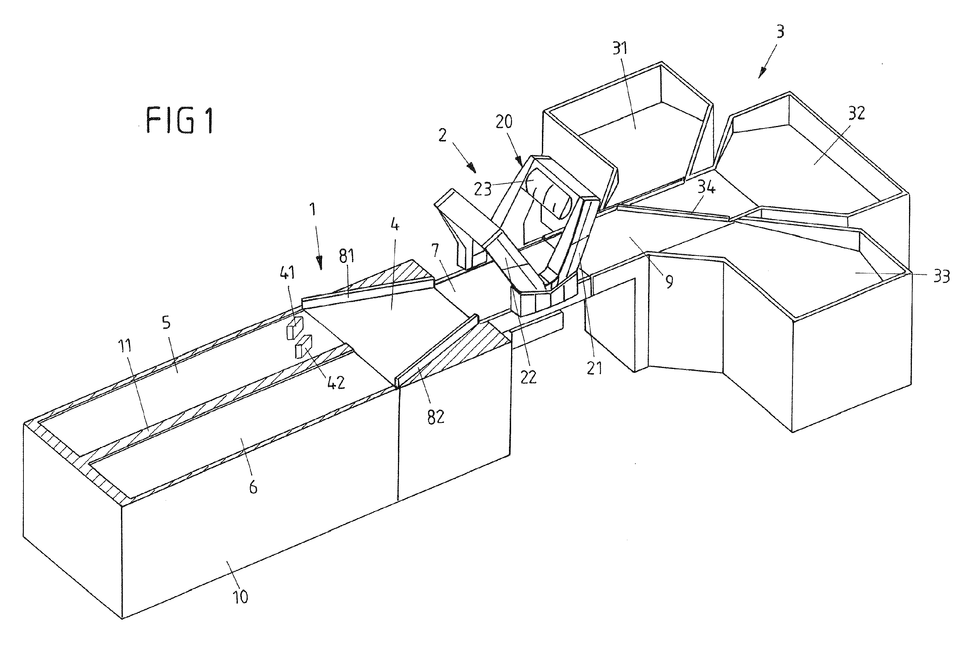

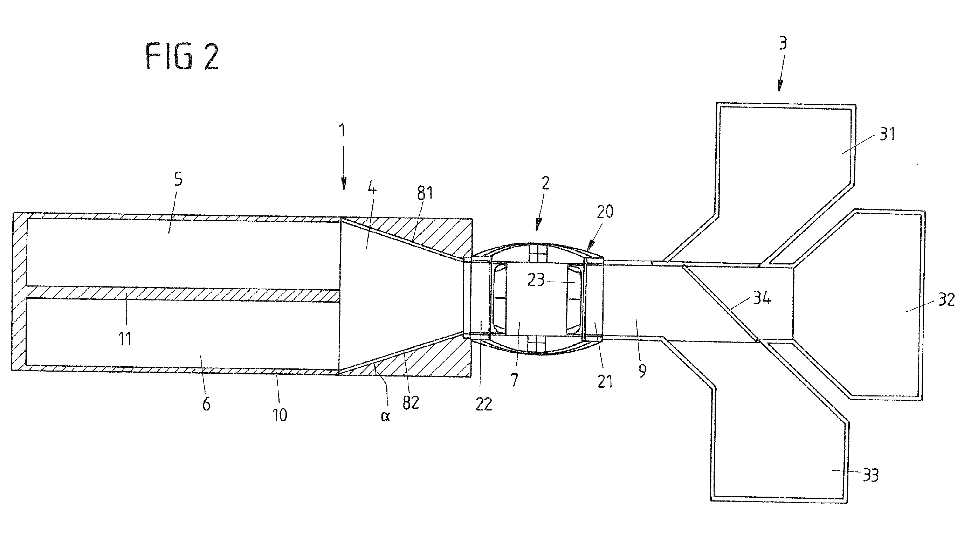

Die Figuren 1 und 2 zeigen beispielhaft eine Vorrichtung zum Auflegen, Vereinzeln, Scannen und Ablegen von Waren in einem Supermarkt oder einem anderem Einkaufsmarkt. Eine solche Vorrichtung wird auch als "Self Checkout"-Kasse oder Selbstbedienungskasse bezeichnet. Die Vorrichtung umfasst als Hauptkomponenten eine Vereinzelungsvorrichtung 1, einen Tunnelscanner 2 und einen Entnahmebereich 3.

Die Vereinzelungsvorrichtung 1 umfasst mehrere nebeneinander und hintereinander angeordnete Warentransportbänder 4, 5, 6, 7, die allesamt in einer horizontalen Ebene angeordnet sind. Jedes Warentransportband 4, 5, 6, 7 weist naturgemäß zwei Längsseiten, an die Längsseiten angrenzende Bereiche und einen mittigen Bereich auf.

In Transportrichtung sind zunächst auf einem Basiselement 10 ein erstes und ein zweites Warentransportband 5, 6 vorgesehen, die parallel zueinander verlaufen und durch eine Schiene 11 voneinander getrennt sind. Diese beiden Transportbänder 5, 6 werden derart betrieben, dass zu einem gegebenen Zeitpunkt nur eines der Transportbänder 5, 6 läuft, während das andere Band still steht. Hierdurch wird in Verbindung mit dem Basisteil 10 ein Ablagebereich bereitgestellt, der es gleichzeitig zwei Kunden erlaubt, Waren auf jeweils einem der beiden Transportbänder 5, 6 abzustellen.

Während die Waren des einen Kunden auf dem einen Transportband 5 transportiert und wie nachfolgend erläutert vereinzelt und gescannt werden, steht das andere Transportband 6 still, wobei jedoch schon Ware auf das Transportband 6 aufgelegt gelegt werden kann. Nach Abschluss des Einkaufs des erstgenannten Kunden steht das bisher laufende Transportband 5 still und fängt das andere Transportband 6 an zu laufen. Dieser Wechsel setzt sich beliebig fort.

Die beiden Transportbänder 5, 6 laufen mit einer ersten Geschwindigkeit. In Transportrichtung hinter ihnen ist ein drittes Warentransportband 4 angeordnet. Dieses weist gegenüber den Transportbändern 5, 6 eine höhere Bandgeschwindigkeit auf. Dem dritten Transportband 4 sind zwei seitliche Führungselemente 81, 82 zugeordnet, die schräg zur Transportrichtung ausgerichtet sind. Diese Führungselemente 81, 82 sind jeweils derart ausgerichtet und angeordnet, dass an oder benachbart einer Längsseite eines Warentransportbandes 5, 6 und damit auch an oder benachbart einer Längsseite des Warentransportbandes 4 platzierte Waren durch das seitliche Führungselement 81, 82 mit einer veränderten Transportgeschwindigkeit in Richtung der Mitte des Warentransportbandes 4 bewegt werden, während in der Mitte und/oder an der anderen Längsseite des Warentransportbandes 5, 6 und damit auch des Warentransportbandes 4 platzierte Waren nicht in Kontakt mit dem Führungselement 81, 82 treten.

Beispielsweise tritt die in der Figur 1 dargestellte, an der einen Längsseite des Warentransportbandes 5 platzierte Ware 41 in Kontakt mit dem Führungselement 81, nachdem die Ware vom Warentransportband 5 auf das Warentransportband 4 übergeben worden ist. Die auf dem Warentransportband 5 mittig oder im Bereich der anderen Längsseite angeordnete, schematisch dargestellte Ware 42 wird dagegen nach Übergabe an das Warentransportband 4 ohne Berührung an dem seitlichen Führungselement 81 vorbei transportiert. Entsprechendes gilt für das andere seitliche Führungselement 82 und auf dem anderen Warentransportband 6 platzierte Waren.

Die seitlichen Führungselemente 81, 82 sind im dargestellten Ausführungsbeispiel, jedoch nicht notwendigerweise zueinander symmetrisch angeordnet, so dass sie einen zweidimensionalen Trichter bilden, der sich in Transportrichtung verjüngt. Der Winkel α (vgl. Figur 2), in dem die seitlichen Führungselemente 81, 82 schräg zur Transportrichtung verlaufen, liegt beispielsweise im Bereich zwischen 15° und 45°, beispielsweise im Bereich zwischen 20° und 30°.

Die seitlichen Führungselemente 81, 82 sind in einer ersten Ausgestaltung als ortsfeste Leitelemente ohne bewegliche Teile ausgebildet. Gemäß einem zweiten Ausführungsbeispiel handelt es sich um vertikal ausgerichtete Förderbänder, die mit einer anderen Bandgeschwindigkeit angetrieben werden als das Warentransportband 4, das sie begrenzen. Die andere Bandgeschwindigkeit ist dabei derart, dass die vertikal ausgerichteten Förderbänder mit einer schnelleren, einer langsameren oder einer entgegengesetzten Bandgeschwindigkeit verglichen mit der Bandgeschwindigkeit des Warentransportbandes 4 angetrieben werden.

Dabei kommt es darauf an, dass die transportierten Waren bei ihrem Kontakt mit einem seitlichen Führungselement 81, 82 eine Änderung ihrer Transportgeschwindigkeit erfahren, so dass sie bei ihrer automatischen Bewegung in Richtung der Mitte des Warentransportbandes vor Waren geschoben werden oder hinter Waren zurückfallen, die in der Mitte des Warentransportbandes 4 platziert sind. Auf diese Weise erfolgt eine automatische Vereinzelung selbst gedrängt auf dem Warentransportband 5, 6 ankommender Waren. Dieser Effekt einer Änderung der Transportgeschwindigkeit wird stets dann erreicht, wenn das Warentransportband eine substantiell andere Geschwindigkeit aufweist als das Führungselement 81, 82, weswegen dieses in unterschiedlichen Ausgestaltungen mit einer schnelleren Bandgeschwindigkeit, einer langsameren Bandgeschwindigkeit, ortsfest oder mit einer entgegengesetzten Bandgeschwindigkeit ausgebildet sein kann.

Die seitlichen Führungselemente 81, 82 sind im dargestellten Ausführungsbeispiel jeweils geradlinig ausgebildet, so dass sie schräge, aber in sich gerade seitliche Begrenzungen des Warentransportbandes 4 bereitstellen. Alternativ ist es ebenfalls möglich, dass die seitlichen Führungselemente 81, 82 nicht geradlinig ausgebildet sind, sondern beispielsweise eine Krümmung aufweisen, wobei beispielsweise vorgesehen sein kann, dass eine solche Krümmung zum Ausgang des gebildeten Trichters hin abnimmt. Eine solche gekrümmte Anordnung der seitlichen Führungselemente stellt ebenfalls eine schräge Anordnung im Sinne der vorliegenden Erfindung dar.

Die seitlichen Führungselemente 81, 82 beginnen am Übergang zwischen den Warentransportbändern 5, 6 und dem Warentransportband 4, so dass sie sich ausgehend von dem Übergang schräg zur Transportrichtung in Richtung der Transportbandmitte erstrecken. Alternativ können sich auch in Abstand zu dem genannten Übergang beginnen.

Es wird darauf hingewiesen, dass auch das Warentransportband 4 mit zwei parallelen Längsseiten ausgebildet ist, wobei die Bereiche, die sich außerhalb des durch die beiden seitlichen Führungselemente 81, 82 gebildeten Trichters befinden, durch die schraffiert dargestellte Fläche im in der Figur 1 rechten Bereich des Basisteils 10 überdeckt sind. An das dritte Warentransportband 4 schließt sich ein viertes Warentransportband 7 an. Dieses weist eine noch höhere Bandgeschwindigkeit auf als das dritte Warentransportband 4. Dem Warentransportband 7 ist ein Tunnelscanner 20 zugeordnet, der dazu eingerichtet und vorgesehen ist, auf dem Transportband 7 angeordnete und vereinzelte Waren jeweils einzeln zu scannen und zu erfassen. Der Tunnelscanner 20 weist im dargestellten Ausführungsbeispiel zwei winklig zueinander angeordnete Tore 21, 22 auf, an denen eine Mehrzahl von Scannern 23 und/oder anderen Bilderfassungsgeräten montiert sind. Dieser Aufbau ist jedoch lediglich beispielhaft zu verstehen. Der Tunnelscanner 20 kann auch in anderer Weise ausgebildet sein.

An das Transportband 7 schließt sich hinter dem Tunnelscanner 20 ein weiteres Transportband 9 an. Dieses ist allerdings optional. Sofern es vorhanden ist, weist es bevorzugt die gleiche Bandgeschwindigkeit auf wie das vierte Transportband 7. Alternativ kann das Transportband 7 sich auch in den Bereich erstrecken, in dem in den Figuren 1 und 2 das Transportband 9 dargestellt ist.

Das Transportband 9 dient in Verbindung mit einem Verstellelement 34 der Verteilung der Waren in jeweils einer der Entnahmebereiche 31-33 des Entnahmebereichs 3. An diesen Entnahmebereichen 31-33 oder in räumlicher Nähe zu diesen sind ein oder mehrere Bezahlstationen (nicht dargestellt) vorgesehen, an denen der Kunde die gescannte und in dem jeweiligen Entnahmebereich 31, 32, 33 bereitgestellte Ware bezahlen kann.

Es wird darauf hingewiesen, dass ausgehend von dem Transportband 4 die beiden Transportbänder 5, 6 vorgeschaltete Transportbänder darstellen und das Transportband 7 ein nachgeschaltetes Transportband darstellt.

Das durch die in den Figuren 1 und 2 dargestellte Vorrichtung realisierte Verfahren umfasst folgende Schritte. Zunächst legt ein Käufer die zu erwerbende Ware auf eines der Transportbänder 5, 6. Dies kann entsprechend dem üblichen Verhalten eines Kunden derart erfolgen, dass die Waren dichtgedrängt auf dem Warentransportband 5, 6 platziert werden. Nach Beendigung des Einkaufs durch den vorangegangenen Kunden wird das Transportband, beispielsweise das Transportband 5 in Gang gesetzt. Die beispielhaft in der Figur 1 dargestellten Waren 41, 42 werden nun in Transportrichtung transportiert.

Bei der Übergabe an das Transportband 4 erfolgt eine erste Vereinzelung der Waren dadurch, dass das Transportband 4 mit einer höheren Bandgeschwindigkeit läuft als das Transportband 5 (oder das Transportband 6). Eine weitere Vereinzelung erfolgt im Bereich des Transportbands 4 durch das seitliche Führungselement 81.

Wie ausgeführt, ist das seitliche Führungselement 81 entweder als feststehendes Teil oder als vertikal ausgerichtetes Förderband mit schnellerer, langsamerer oder entgegengesetzter Bandgeschwindigkeit verglichen mit der Bandgeschwindigkeit des Transportbandes 4 ausgebildet. Hierdurch werden die im äußeren seitlichen Bereich des Transportbandes 5 aufgelegten Waren, wie beispielsweise die Ware 41 der Figur 1, nach Übergabe an das Transportband 4 an dem seitlichen Führungselement 81 positiv beschleunigt oder verlangsamt. Gleichzeitig erfolgt aufgrund der schrägen Ausrichtung des seitlichen Führungselementes 81 ein Bewegen der Ware in Richtung der Mitte des Transportbandes 4.

Dagegen werden Waren, die auf das Transportband 5 mittig oder im Bereich der anderen Längsseite aufgelegt wurden und die dementsprechend auf dem Transportband 4 eher mittig angeordnet sind, ohne Kontakt mit dem seitlichen Führungselement 81 weiter transportiert. Dies führt zu einer weiteren Vereinzelung der aufgelegten Waren.

Gleiches gilt für auf das Transportband 6 aufgelegte Waren und das seitliche Führungselement 82.

Beim Übergang vom Transportband 4 auf das Transportband 7 erfolgt eine dritte und letzte Vereinzelung aufgrund der höheren Bandgeschwindigkeit des Transportbands 7. Die Ware ist nun derart vereinzelt, dass sie einzeln durch den Scanner 20 läuft und von diesem erfasst wird. Anschließend wird die Ware in einem der Entnahmebereiche 31, 32, 33 bereitgestellt.

Es wird darauf hingewiesen, dass die beschriebene Vorrichtung und das mit diesem ausgeführte Verfahren zahlreiche Variationen erfahren können.

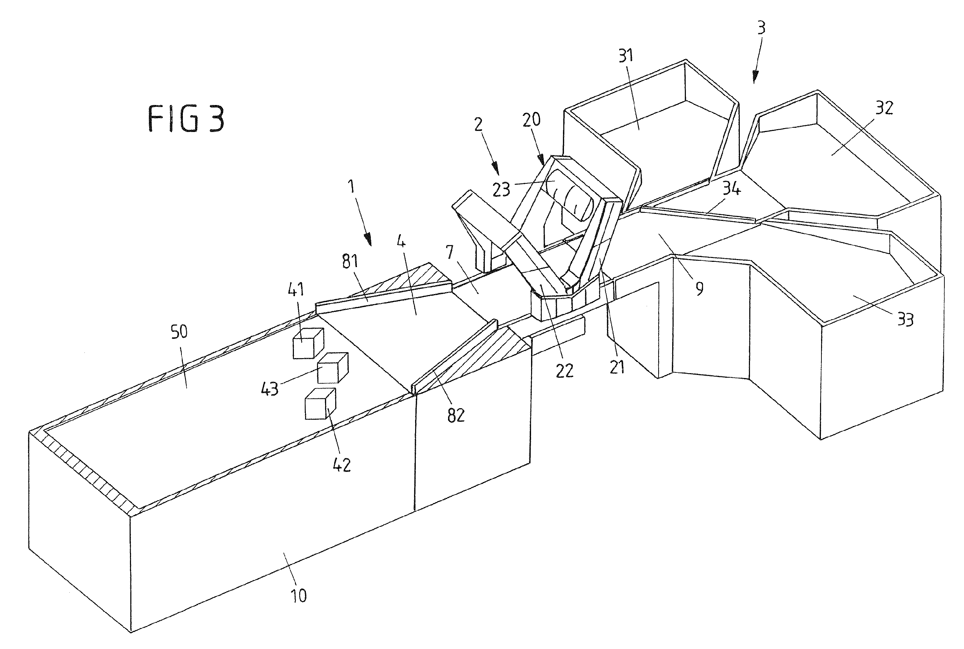

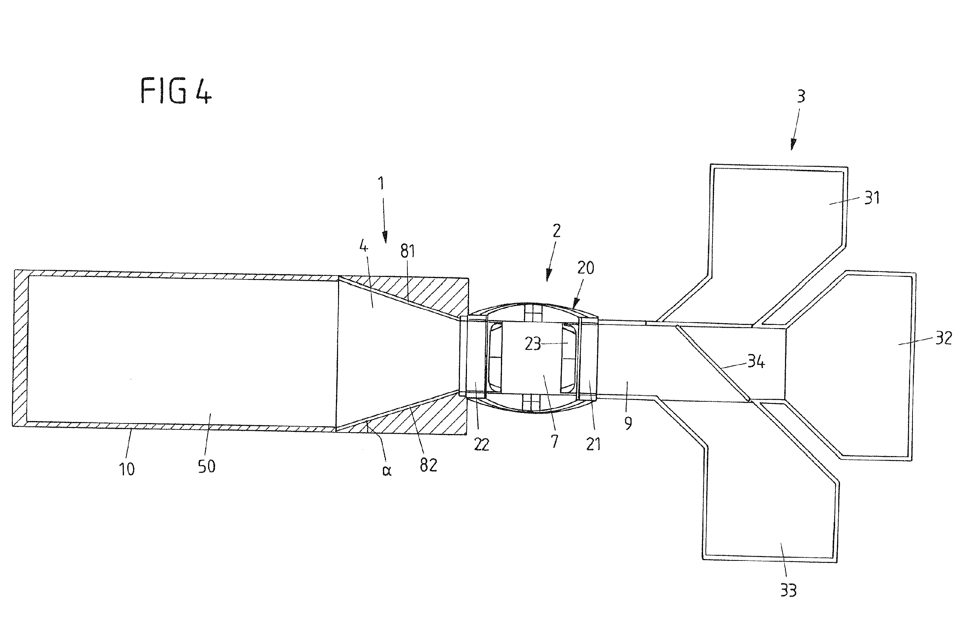

Ein erstes alternatives Ausführungsbeispiel ist in den Figuren 3 und 4 dargestellt, die bis auf den Umstand dem Ausführungsbeispiel der Figuren 1 und 2 entsprechen, dass dem Transportband 4 genau ein Transportband 50 vorgelagert ist, dessen Breite im Wesentlichen der Breite des Transportbands 4 am Anfang des durch die beiden seitlichen Führungselemente 81, 82 gebildeten Trichters entspricht.

Bei diesem Ausführungsbeispiel wird sowohl Ware, die sich an oder benachbart der einen Längsseite des Warentransportbandes 50 befindet als auch Ware, die sich an oder benachbart der anderen Längsseite des Warentransportbandes 50 befindet, nach Übergabe an das Warentransportband 4 jeweils durch eines der seitlichen Führungselemente 81, 82 in seiner Transportgeschwindigkeit verändert und in Richtung der Mitte des Warentransportbandes 4 bewegt. Dies gilt beispielsweise für die schematisch dargestellten Waren 41, 42 der Figur 3. Eine mittig auf dem Warentransportband 50 platzierte Ware, wie z.B. die Ware 43 der Figur 3, wird dagegen ohne Kontakt mit den Führungselementen 81, 82 zum Warentransportband 7 befördert. Hierdurch und durch die unterschiedlichen Bahngeschwindigkeiten erfolgt aufgrund der beschriebenen Mechanismen eine effiziente Vereinzelung der Waren, die anschließend im Scanner 20 gescannt und in einem der Entnahmebereiche 31, 32, 33 bereitgestellt werden.

Gemäß einem weiteren alternativen Ausführungsbeispiel (nicht gesondert dargestellt) sind in den Figuren 3 und 4 die Warentransportbänder 50 und 4 zu einem einzigen Warentransportband zusammengefasst. Unterschiedliche Bandgeschwindigkeiten sind dann lediglich beim Übergang zum Transportband 7 realisiert.

Gemäß einem weiteren alternativen Ausführungsbeispiel (nicht gesondert dargestellt) umfasst die Vorrichtung nur ein seitliches Führungselement. Das Transportband 7, das zum Tunnelscanner 20 führt, ist in diesem Fall nicht mittig zum vorangegangenen Transportband, sondern in Flucht mit einer der Längskanten des vorangegangenen Transportbandes ausgebildet.

Gemäß einem weiteren Ausführungsbeispiel kann vorgesehen sein, dass der Übergang zwischen zwei aufeinanderfolgenden Transportbändern unterschiedlicher Laufgeschwindigkeit nicht am Anfang des durch die beiden seitlichen Führungselemente 81, 82 gebildeten Trichters, sondern innerhalb eines solchen Trichters erfolgt, d.h. eine Laufgeschwindigkeitsänderung im Bereich des mindestens einen Führungselements erfolgt.

Die Erfindung beschränkt sich in ihrer Ausgestaltung nicht auf die vorstehend dargestellten Ausführungsbeispiele, die lediglich beispielhaft zu verstehen sind. So sind beispielsweise Anzahl und Form der Transportbänder, Anzahl, Form und Schrägstellungsgrad der seitlichen Führungselemente und die konkrete Darstellung sämtlicher Elemente der Figuren nur beispielhaft zu verstehen.

## Patentansprüche

1. Vorrichtung zur Vereinzelung von Waren, die aufweist:
- mindestens ein Warentransportband (5, 6, 50; 4; 7), das in einer horizontalen Ebene angeordnet und dazu ausgebildet ist, auf dem Warentransportband (4) platzierte Waren in eine Transportrichtung zu transportieren, und
- mindestens ein seitliches Führungselement (81, 82), das schräg zur Transportrichtung ausgerichtet ist,
**dadurch gekennzeichnet,**
**dass** das seitliche Führungselement (81, 82) derart ausgebildet und angeordnet ist, dass an oder benachbart einer Längsseite des Warentransportbandes (5, 6, 50; 4) platzierte Waren durch das seitliche Führungselement (81, 82) in ihrer Transportgeschwindigkeit verändert werden, während mittig und/oder an der anderen Längsseite des Warentransportbandes (5, 6, 50; 4) platzierte Waren nicht in Kontakt mit dem seitlichen Führungselement (81, 82) treten und eine unveränderte Transportgeschwindigkeit aufweisen.

2. Vorrichtung nach Anspruch 1, **dadurch gekennzeichnet, dass** das seitliche Führungselement (81, 82) als ortsfestes Leitelement ohne bewegliche Teile ausgebildet ist.

3. Vorrichtung nach Anspruch 1, **dadurch gekennzeichnet, dass** das seitliche Führungselement (81, 82) als ein vertikal ausgerichtetes Förderband ausgebildet ist, das die mit ihm in Kontakt tretenden Waren positiv oder negativ beschleunigt.

4. Vorrichtung nach Anspruch 3, **dadurch gekennzeichnet, dass** das vertikal ausgerichtete Förderband mit einer schnelleren, einer langsameren oder einer entgegengesetzten Bandgeschwindigkeit angetrieben ist als das Warentransportband (4).

5. Vorrichtung nach einem der vorangehenden Ansprüche, **gekennzeichnet durch** ein weiteres seitliches Führungselement (81, 82), das schräg zur Transportrichtung ausgerichtet ist, wobei die beiden Führungselemente (81, 82) in Transportrichtung aufeinander zulaufen und einen zweidimensionalen Trichter bilden.

6. Vorrichtung nach einem der vorangehenden Ansprüche, **dadurch gekennzeichnet, dass** die Vorrichtung mindestens zwei in Transportrichtung hintereinander angeordnete Warentransportbänder (5, 6, 50, 4, 7) aufweist, bei denen das hintere Warentransportband (4) eine höhere Bandgeschwindigkeit aufweist als das vordere Warentransportband (5, 6, 50).

7. Vorrichtung nach einem der vorangehenden Ansprüche, **dadurch gekennzeichnet, dass** einem Warentransportband (4), das von mindestens einem seitlichen Führungselement (81, 82) seitlich begrenzt ist, ein erstes vorgeschaltetes und ein zweites vorgeschaltetes Warentransportband (5, 6) vorgeschaltet sind, wobei das erste vorgeschaltete Warentransportband (5) und das zweite vorgeschaltete Warentransportband (6) parallel zueinander verlaufen und zusammen eine Breite aufweisen, die in etwa der Breite des Warentransportbandes (4) entspricht.

8. Vorrichtung nach Anspruch 7, **dadurch gekennzeichnet, dass** das erste vorgeschaltete Warentransportband (5) und das zweite vorgeschaltete Warentransportband (6) derart betrieben sind, dass zu einem bestimmten Zeitpunkt stets nur eines dieser Warentransportbänder (5, 6) Waren transportiert, während das andere Warentransportband (6, 5) still steht.

9. Vorrichtung nach Anspruch 7 oder 8, **dadurch gekennzeichnet, dass** das in Bezug auf die Transportrichtung vordere Ende des seitlichen Führungselements (81, 82) am Übergang zwischen dem mindestens einen vorgeschalteten Warentransportband (5, 6, 50) und dem Warentransportband (4) angeordnet ist, so dass sich das seitliche Führungselement (81, 82) ausgehend von dem Übergang zwischen dem mindestens einen vorgeschalteten Warentransportband (5, 6, 50) und dem Warentransportband (4) schräg zur Transportrichtung erstreckt.

10. Vorrichtung nach einem der vorangehenden Ansprüche, **dadurch gekennzeichnet, dass** die Vorrichtung des Weiteren mindestens ein nachgeschaltetes Warentransportband (7) aufweist, das einem Warentransportband (4), das von mindestens einem seitlichen Führungselement (81, 82) seitlich begrenzt ist, nachgeschaltet ist, wobei das nachgeschaltete Warentransportband (7) eine höhere Bandgeschwindigkeit aufweist als das Warentransportband (4).

11. Vorrichtung nach Anspruch 10, soweit rückbezogen auf Anspruch 5, **dadurch gekennzeichnet, dass** das nachgeschaltete Warentransportband (7) eine Breite aufweist, die in etwa dem Abstand der zwei seitlichen Führungselemente (81, 82) an ihrem zusammenlaufenden Ende entspricht.

12. Vorrichtung nach Anspruch 10 oder 11, **dadurch gekennzeichnet, dass** die Vorrichtung im Bereich des nachgeschalteten Warentransportbandes (7) einen Tunnelscanner (20) aufweist.

13. Vorrichtung nach einem der vorangehenden Ansprüche, **dadurch gekennzeichnet, dass** die schräge Ausrichtung des seitlichen Führungselements (81, 82) zur Transportrichtung derart ist, dass zwischen Führungselement und Transportrichtung ein Winkel (α) realisiert ist, der insbesondere zwischen 0° und 90°, insbesondere zwischen 15° und 45° liegt.

14. Verfahren zur Vereinzelung von Waren, die auf einem Warentransportband (5, 6, 50; 4; 7) transportiert werden,
**dadurch gekennzeichnet,**
**dass** an oder benachbart der einen Längsseite des Warentransportbandes (5, 6, 50; 4; 7) platzierte Waren durch ein seitliches Führungselement (81, 82) in ihrer Transportgeschwindigkeit verändert und gleichzeitig in Richtung der Mitte des Warentransportbandes bewegt werden, während in der Mitte und/oder an der anderen Längsseite des Warentransportbandes platzierte Waren nicht in Kontakt mit dem Führungselement (81, 82) treten und an diesem mit unveränderter Transportgeschwindigkeit vorbei transportiert werden.

15. Verfahren nach Anspruch 14, **dadurch gekennzeichnet, dass** eine zusätzliche Vereinzelung der Waren dadurch ereicht wird, dass die Waren sukzessive mindestens zwei hintereinander angeordnete Warentransportbänder (5, 6, 50; 4; 7) durchlaufen, die eine zunehmend höhere Bandgeschwindigkeit aufweisen.

16. Verfahren nach Anspruch 14 oder 15, **dadurch gekennzeichnet, dass** die Waren sukzessive mindestens drei hintereinander angeordnete Warentransportbänder (5, 6, 50; 4; 7) durchlaufen, wobei auf das erste Warentransportband (5, 6, 50) durch einen Kunden Waren platzierbar sind, im Bereich des zweiten Warentransportbandes (4) außermittig platzierte Waren durch mindestens ein seitliches Führungselement (81, 82) in ihrer Transportgeschwindigkeit verändert und in die Mitte des zweiten Warentransportbandes (4) bewegt werden, und im Bereich des dritten Warentransportbandes (7) ein Tunnelscanner (20) angeordnet ist.
